Europäisches Patentamt

European Patent Office

Office européen des brevets

(11) Publication number: **0 293 653 B1**

(12) EUROPEAN PATENT SPECIFICATION

(45) Date of publication of patent specification: **25.03.92**   (51) Int. Cl.⁵: **G05G 3/00**

(21) Application number: **88107629.3**

(22) Date of filing: **11.05.88**

(54) Method for assembling a vehicle gear lever, and a gear lever obtained by said method.

(30) Priority: **29.05.87 IT 6746687**

(43) Date of publication of application:
**07.12.88 Bulletin  88/49**

(45) Publication of the grant of the patent:
**25.03.92 Bulletin  92/13**

(84) Designated Contracting States:
**DE ES FR GB SE**

(56) References cited:
**FR-A- 1 350 298**
**US-A- 4 279 175**

**PATENT ABSTRACTS OF JAPAN, vol. 8, no. 248 (P-313)[1685], 14th November 1984, page 129 P 313; & JP-A-59 121 414 (TOYOTA JIDOSHA K.K.) 13-07-1984**

(73) Proprietor: **FIAT AUTO S.p.A.**
**Corso Giovanni Agnelli 200**
**I-10135 Torino(IT)**

(72) Inventor: **Bruno, Alfonso**
**Via Buenos Aires, 106**
**IT-10100 Torino(IT)**
Inventor: **Rabino, Edoardo**
**Corso Benedetto Croce, 36**
**IT-10100 Torino(IT)**
Inventor: **Ravizza, Renato**
**Strada Miravalle, 19/10**
**IT-10024 Moncalieri(IT)**

(74) Representative: **Prato, Roberto et al**
**STUDIO TORTA Società Semplice Via Viotti 9**
**I-10121 Torino(IT)**

## Description

This invention relates to a method for assembling a vehicle gear lever, and a gear lever obtained by said method.

More particularly, the invention relates to a method for fixing together two of the components of said lever, namely the support rod for the gear positioning fork and the rod control dog.

A product of the aforesaid type consists essentially of a metal rod and a metal dog, and is usually produced by inserting the rod through a suitable seat provided in the dog, and then connecting the two parts rigidly together by means of a screw. Generally, the dog is produced by casting, so that the resultant product has a heavy and bulky structure, although it has good operating characteristics.

In order to give the aforesaid product a structure which can be produced using less material and a less costly manufacturing procedure, systems have been proposed for fixing said parts together by longitudinally welding the dog to the rod. Such welding however results in rotational deformation of the dog about the rod, because of the shrinkage which occurs on welding. A welding system has also been proposed in which the connection between the rod and dog is obtained by making two longitudinal welds simultaneously along the adjacent peripheral regions of the rod and dog by means of two laser beams. However, this latter system is difficult and costly to implement, in that the particular geometry of the parts to be fixed together makes it very complicated to coordinate the two said laser beams.

The object of the present invention is to provide a method for assembling a gear lever such as to produce a gear lever which obviates the drawbacks (bulk, weight, cost etc.) connected with the aforesaid known methods and current levers.

Said object is attained according to the present invention by a method for fixing together a rod and a dog of a vehicle gear lever, characterised by comprising the following operations in succession:

- forming in said road a recess having a flat surface parallel to the longitudinal axis of said rod to define a seat for housing said dog;
- forming in said dog a comb-shaped end portion comprising at least two parallel teeth;
- resting said end portion of said dog on said flat surface of the recess in said rod, with said parallel teeth positioned perpendicular to the longitudinal axis of said rod; and
- welding each tooth to said rod along peripheral regions of contact between the tooth and rod which lie in a plane perpendicular to the longitudinal axis of said rod.

The present invention also relates to a vehicle gear lever of the type provided with a rod and a dog fixed to the rod, characterised in that said rod is provided with a recess having a flat surface parallel to the longitudinal axis of said rod, and said dog is provided with a comb-shaped end portion with at least two parallel teeth; said end portion of said dog resting on said flat surface of the recess in said rod and being fixed to this latter by a plurality of welds, each of which extends along a respective peripheral region of contact between the tooth and rod and lies in a plane perpendicular to the longitudinal axis of said rod.

The present invention will be more apparent from the description of a preferred embodiment thereof given hereinafter with reference to the accompanying drawing, in which:

Figure 1 is an exploded view of a portion of a gear lever before assembly;

Figure 2 is a plan view to an enlarged scale of a detail of the lever of Figure 1 after assembly; and

Figure 3 is a section on the line III-III of Figure 2.

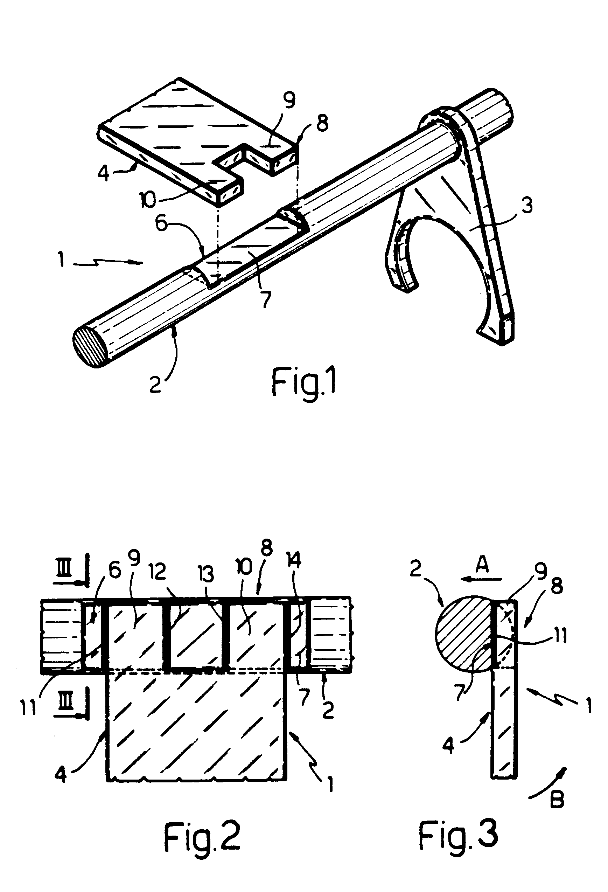

In Figure 1, the reference numeral 1 indicates overall a portion of a vehicle gear lever of the type comprising essentially a cylindrical rod 2 supporting a fork 3 which when in use engages a respective gear selection sleeve (not shown), and a dog 4 the purpose of which is to control the movements (both longitudinal and rotational) of the rod 2 when in use.

According to the present invention, the rod 2 is provided with a recess 6 having a flat surface 7 parallel to the longitudinal axis of the rod, and the dog 4 is provided with an end portion 8 shaped as a comb with at least two parallelepiped teeth 9, 10 extending parallel to each other. When in use (see Figures 2 and 3), the end portion 8 of the dog 4 rests on the flat surface 7 of the recess 6 in the rod 2, and is fixed to this latter by a plurality of welds 11, 12 and 13, 14 each of which extends along a respective peripheral region of contact between the teeth 9 and 10 and the rod 2 and lies in a plane perpendicular to the longitudinal axis of the rod 2.

The method for assembling the portion 1 of said gear lever comprises essentially the following operations in succession:

- forming in the rod 2 the recess 6 provided with the flat surface 7 parallel to the longitudinal axis of the rod 2, so as to define a seat for housing the end portion 8 of the dog 4;
- forming in said dog 4 the said comb-shaped end portion 8 with the two parallel teeth 9, 10;
- resting the end portion 8 of the dog 4 on the flat surface 7 of the recess 6 in the rod 2, taking care to position the parallel teeth 9, 10 perpendicular to the longitudinal axis of the rod 2; and
- welding each tooth 9, 10 to the rod 2 along peripheral regions of contact between the tooth and rod which are perpendicular to the longitudinal axis of the rod, so as to form the transverse welds 11, 12 and 13, 14 as shown in Figure 2.

Conveniently, the aforesaid welds can be formed under high-density energy conditions by using for example laser, electron beam or miniplasma technology.

The advantages of the aforesaid method and of the gear lever obtained by said method are apparent from an examination of their characteristics.

In this respect, by welding along the lines 11, 12 and 13, 14 indicated in Figure 2, the shrinkages caused by welding result essentially in a transverse approach of the dog 4 towards the rod 2 (in the direction indicated by the arrow A in Figure 3), without inducing any rotation of one part relative to the other (for example in the direction indicated by the arrow B in Figure 3).

The "double toothed" geometry of the end portion 8 of the dog 4 enables the total length of the welds and thus the mechanical strength of the final product to be increased.

It is apparent that as there is no restriction on making welds successively, the aforesaid difficulties resulting from the need to make two welds simultaneously do not arise.

Finally, it is apparent that modifications be be made.

For example, the relative shapes of the two described parts could be different from that shown (in particular the teeth of the end portion 8 of the dog 4 could be more than two in number), provided the concept of making the welds transversely to the longitudinal axis of the said rod 2 is not modified.

## Claims

1. A method for fixing together a rod (2) and a dog (4) of a vehicle gear lever (1), characterised by comprising the following operations in succession:
   - forming in said rod (2) a recess (6) having a flat surface (7) parallel to the longitudinal axis of said rod (2) to define a seat for housing said dog (4);
   - forming in said dog (4) a comb-shaped end portion (8) comprising at least two parallel teeth (9, 10);
   - resting said end portion (8) of said dog (4) on said flat surface (7) of the recess (6) in said rod (2), with said parallel teeth (9, 10) positioned perpendicular to the longitudinal axis of said rod (2); and
   - welding each said tooth (9, 10) to said rod (2) along peripheral regions of contact (11, 12, 13, 14) between the tooth (9, 10) and rod (2) which lie in a plane perpendicular to the longitudinal axis of said rod (2).

2. A method as claimed in claim 1, characterised in that said welding is carried out using a high-density energy source.

3. A method as claimed in claim 2, characterised in that said high-density energy source is chosen from one of the following: laser, electron beam, miniplasma.

4. A vehicle gear lever (1) of the type provided with a rod (2) and a (4) dog fixed to the rod, characterised in that said rod (2) is provided with a recess (6) having a flat surface (7) parallel to the longitudinal axis of said rod (2), and said dog (4) is provided with a comb-shaped end portion (8) with at least two parallel teeth (9, 10); said end portion (8) of said dog (4) resting on said flat surface (7) of the recess (6) in said rod (2) and being fixed to this latter by a plurality of welds (11, 12, 13, 14), each of which extends along a respective peripheral region of contact between the tooth (9, 10) and rod (2) and lies in a plane perpendicular to the longitudinal axis of said rod (2).

5. A lever as claimed in claim 4, characterised in that each said tooth (9, 10) has an essentially parallelepiped structure.

6. A lever as claimed in claim 5, characterised in that said welds (11, 12, 13, 14) extend along opposing edges of said teeth (9, 10) of parallelepiped structure.

## Revendications

1. Méthode pour fixer ensemble une tige (2) et un entraîneur (4) d'un levier de sélection des pignons (1) dans une boîte de vitesses de véhicule, caractérisée en ce qu'elle comporte les opérations successives suivantes :
   - former dans la tige (2) un évidement (6) ayant une surface plane (7) parallèle à l'axe longitudinal de la tige (2) pour définir un siège pour loger l'entraîneur (4);
   - former dans l'entraîneur (4) une portion terminale en forme de peigne (8) comprenant au moins deux dents parallèles (9,10);
   - appliquer cette portion terminale (8) de l'entraîneur (4) sur la surface plane (7) de l'évidement (6) dans la tige (2), les dents parallèles (9,10) étant disposées perpendiculairement à l'axe longitudinal de la tige (2); et

- souder chaque dent (9,10) sur la tige (2) le long des régions périphériques de contact (11,12;13,14) entre la dent (9,10) et la tige (2) qui se trouvent dans un plan perpendiculaire à l'axe longitudinal de la tige (2).

2. Méthode selon la revendication 1, caractérisée en ce que la soudure est effectuée en utilisant une source d'énergie à haute densité.

3. Méthode selon la revendication 2, caractérisée en ce que la source d'énergie haute densité est choisie parmi l'une des suivantes : laser, faisceau d'électrons, mini-plasma.

4. Levier de sélection des pignons (1) dans une boîte de vitesses de véhicule, du type comportant une tige (2) et un entraîneur (4) fixé sur la tige, caractérisé en ce que la tige (2) présente un évidement (6) ayant une surface plane (7) parallèle à l'axe longitudinal de la tige (2), et en ce que l'entraîneur (4) comporte une portion terminale en forme de peigne (8) avec au moins deux dents parallèles (9,10), cette portion terminale (8) de l'entraîneur (4) reposant sur la surface plane (7) de l'évidement (6) dans la tige (2) et étant fixée sur cette dernière par plusieurs lignes de soudure (11,12;13,14), dont chacune s'étend le long d'une région périphérique respective de contact entre la dent (9,10) et la tige (2) et se trouve dans un plan perpendiculaire à l'axe longitudinal de la tige (2).

5. Levier selon la revendication 4, caractérisé en ce que chacune de ces dents (9,10) a une structure essentiellement parallélépipédique.

6. Levier selon la revendication 5, caractérisé en ce que les lignes de soudure (11,12;13,14) s'étendent le long de bords opposés des dents (9,10) de structure parallélépipédique.

**Patentansprüche**

1. Verfahren zum Aneinanderbefestigen einer Stange (2) und einer Klaue (4) einer Fahrzeug-Getriebeschaltgabel (1), dadurch gekennzeichnet, daß es die nachstehenden Bearbeitungsschritte in Folge aufweist:
- Ausformen einer Ausnehmung (6) in der Stange (2) mit einer abgeflachten Oberfläche (7), die parallel zu der Längsachse der Stange (2) verläuft, um eine Auflagefläche zum Aufnehmen der Klaue (4) abzugrenzen;
- Ausformen eines kammartigen Endabschnitts (8) an der Klaue (4), der mindestens zwei parallele Zinken (9, 10) aufweist;
- Auflegen des Endabschnitts (8) der Klaue (4) auf der abgeflachten Oberfläche (7) der Ausnehmung (6) in der Stange (2), wobei die parallelen Zinken (9, 10) senkrecht zur Längsachse der Stange (12) ausgerichtet werden; und
- Verschweißen jedes der Zinken (9, 10) mit der Stange (2) entlang der peripheren Konkaktbereiche (11, 12, 13, 14) zwischen den Zinken (9, 10) und der Stange (2), die in einer Ebene liegen, die senkrecht zur Längsachse der Stange (2) steht.

2. Verfahren nach Anspruch 1, dadurch gekennzeichnet, daß das Verschweißen unter Verwendung einer Hochdichte-Energiequelle ausgeführt wird.

3. Verfahren nach Anspruch 2, dadurch gekennzeichet, daß die Hochdichte-Energiequelle aus einer der folgenden Energiequellen ausgewählt wird: Laser, Elektronenstrahl oder Miniplasma.

4. Fahrzeug-Getriebeschalthebel (1) von der Art, die eine Stange (2) und eine Klaue (4), die an der Stange (2) befestigt ist, aufweist, dadurch gekennzeichnet, daß die Stange (2) eine Ausnehmung (6) mit einer abgeflachten Oberfläche (7) aufweist, die parallel zur Längsachse der Stange (2) verläuft, und daß die Klaue (4) einen kammartigen Endabschnitt (8) mit mindestens zwei parallelen Zinken (9, 10) aufweist, wobei der Endabschnitt (8) der Klaue (4) auf der abgerlachten Oberfläche (7) ruht und an der letzteren durch eine Mehrzahl von Schweißnähten (11, 12, 13, 14) befestigt ist, deren jede sich entlang eines jeweiligen peripheren Kontaktbereichs zwischen den Zinken (9, 10) und der Stange (2) erstreckt, und deren jede in einer Ebene liegt, die senkrecht zur Längsachse der Stange (2) steht.

5. Fahrzeug-Getriebeschalthebel (1) nach Anspruch 4, dadurch gekennzeichnet, daß jeder Zinken (9, 10) eine im wesentlichen parallelepipede Struktur aufweist.

6. Fahrzeug-Getriebeschalthebel (1) nach Anspruch 5, dadurch gekennzeichnet, daß die Schweißnähte (11, 12, 13, 14) sich entlang einander abgewandter Kanten der Zinken (9, 10) mit parallelepipeder Struktur erstrecken.

Fig.1

Fig.2

Fig.3